(19) Europäisches Patentamt
European Patent Office
Office européen des brevets

(11) Numéro de publication: **0 389 530 B1**

(12) # FASCICULE DE BREVET EUROPEEN

(45) Date de publication de fascicule du brevet: **11.08.93**

(51) Int. Cl.$^5$: **B01J 29/04**, B01J 29/08, C07C 2/86

(21) Numéro de dépôt: **88910058.2**

(22) Date de dépôt: **23.11.88**

(86) Numéro de dépôt internationale : **PCT/FR88/00572**

(87) Numéro de publication internationale : **WO 89/04716 (01.06.89 89/12)**

(54) **NOUVEAUX CATALYSEURS A BASE DE ZEOLITHES MODIFIES PAR DES ELEMENTS ALCALINS SOUS FORME METALLIQUE, LEUR PREPARATION ET LEUR APPLICATION A L'ALKYLATION DES DERIVES ALKYL-AROMATIQUES.**

(30) Priorité: **23.11.87 FR 8716191**

(43) Date de publication de la demande: **03.10.90 Bulletin 90/40**

(45) Mention de la délivrance du brevet: **11.08.93 Bulletin 93/32**

(84) Etats contractants désignés: **AT BE CH DE GB IT LI LU NL SE**

(56) Documents cités:
**EP-A- 0 123 536**
**EP-A- 0 161 727**
**DE-A- 3 606 706**
**GB-A- 1 177 169**
**US-A- 4 689 316**

**L.R.M. MARTENS, "Preparation of catalysts IV", pag. 531-541 (1987), Elsevier (Amsterdam)**

(73) Titulaire: **CENTRE NATIONAL DE LA RECHERCHE SCIENTIFIQUE**
**15, quai Anatole France**
**F-75007 Paris(FR)**

Titulaire: **SOCIETE NATIONALE ELF AQUITAINE (PRODUCTION)**
**Tour Elf**
**F-92078 Paris la Défense Cédex 45(FR)**

(72) Inventeur: **BARTHOMEUF, Denise**
**25, rue de la Roquette**
**F-75011 Paris(FR)**
Inventeur: **QUENACH DE QUIVILLIC, Viviane**
**10, rue Jeanne-d'Arc**
**F-75013 Paris(FR)**

(74) Mandataire: **Nony, Michel et al**
**Cabinet NONY & CIE 29, rue Cambacérès**
**F-75008 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.6/3.3.1)

## Description

La présente invention a pour objet de nouveaux catalyseurs à base de zéolithes modifiées à l'aide d'additifs constitués par des éléments alcalins sous forme métallique, leur préparation et leur application à l'alkylation des dérivés alkyl-aromatiques.

On sait que l'alkylation de la chaîne latérale des dérivés alkyl-aromatiques constitue une voie intéressante pour la préparation du styrène et de dérivés analogues tels que le p-vinyltoluène ou le p-tertiobutylstyrène. De telles réactions d'alkylation du toluène, des xylènes ou du p-tertiobutyltoluène, par le méthanol, le formaldéhyde ou le méthylal (acétal diméthylique du formaldéhyde), avec l'utilisation de catalyseurs à base de zéolithes échangées par divers cations alcalins et/ou dopées au bore ou au phosphore ont déjà été décrites ; voir par exemple les brevets US 4.115.424, 4.140.726, 4.463.204 et 4.483.936 ; les articles de C.LACROIX et al, Journal de Chimie Physique, 1984, 81, pages 473-490 ; la demande de brevet allemand 3.316.929 ; et l'article de J.M. GARCES et al, Catalysis by Acids and Bases, Imelik et al Ed., Ser. Studies in Surface Sciences and Catalysis, 20, 67-74 (1985) Elsevier Science Publishers B.V., Amsterdam.

La réaction la plus étudiée est la réaction d'alkylation du toluène qui conduit généralement à l'obtention de mélanges de styrène, d'éthylbenzène, et de produits de décomposition de l'agent d'alkylation, et éventuellement de divers produits d'alkylation du noyau aromatique. Pour orienter la sélectivité de la réaction vers la formation de styrène et d'éthylbenzène, on a préconisé l'utilisation de zéolithes X modifiées par l'échange des cations sodium par les cations lithium, potassium, rubidium et/ou césium. Les zéolithes X échangées par le césium se sont révélées les plus intéressantes.

On sait que les zéolithes de type faujasite ont une structure cristalline très organisée, l'élément de base étant une maille tridimensionnelle constituée d'un arrangement régulier de tétraèdres $SiO_4$ et $AlO_4^-$ reliés entre eux par les sommets oxygène. L'assemblage des tétraèdres dans l'espace forme des polyèdres qui délimitent un réseau de canaux, de cages et de cavités dans lesquels se placent les cations alcalins en des points où ils équilibrent les charges négatives portées par les tétraèdres $AlO_4^-$.

Une maille de structure faujasite comporte 192 tétraèdres $SiO_4$ ou $AlO_4^-$ et sa formule globale peut s'écrire :

$$M_p^+(AlO_2)_p\,(SiO_2)_q\ ,\ rH_2O$$

dans laquelle M est un métal alcalin, p et q sont des nombres entiers tels que $p+q = 192$,

r est zéro ou un nombre entier inférieur à 270, selon le degré d'hydratation.

Dans les zéolithes X, le rapport q/p (Si/Al) est inférieur à 1,5 et généralement compris entre 1 et 1,5.

Les zéolithes X peuvent être préparées par exemple selon le procédé décrit dans les brevets US 2.882.244 et 3.251.897.

On peut préparer de façon analogue des gallosilicates à structure de faujasite, qui ont une formule analogue à la précédente, en remplaçant Al par Ga (référence : R.M. BARRER, Hydrothermal Chemistry of Zeolites, Acad. Press, London, 1982, pp.282s). Dans la suite de la description, la référence générale à des zéolithes englobe, par convention, aussi bien les aluminosilicates que les gallosilicates.

Ces zéolithes se présentent sous forme de poudres.

Dans les zéolithes, les ions métalliques (généralement des ions sodium) peuvent être échangés avec d'autres ions alcalins, dans certaines proportions, par mise en contact avec une solution de sel ou d'hydroxyde de ces ions alcalins ; voir par exemple les documents antérieurs cités dans l'introduction, ou encore les documents suivants : SIDORENKO et al, Dokl. Akad. Nauk SSSR, 173, 132 (1967) ; YASHIMA et al., J. Catal., 26 303 (1972) ; Itoh et al, J. Catal., 72, 170 (1981) ; H. Sherry, J. Phys. Chem., 70, 1158 (1966) ; H. Sherry, Molecular Sieves Zeolites, I, Flanigen et al. Ed., A.C.S. Series, 101, 350 (1971).

On sait par ailleurs que divers auteurs ont introduit du sodium métallique dans des zéolithes à cations sodium, par exemple par mise en contact avec des vapeurs de sodium, ou par mélange avec l'azoture de sodium suivi d'un traitement thermique de décomposition de l'azoture ; voir notamment J.A. RABO et al. Discuss. Faraday Soc. 41, 323 (1966) ; et L.R.M. MARTENS et al, Preparation of Catalysts IV, B.Delmon et al Ed., pages 531-541, Elsevier Science Publishers B.V., Amsterdam (1987). Ces derniers auteurs ont utilisé les zéolithes modifiées obtenues dans des réactions d'isomérisation des butènes à température ambiante.

La présente invention a pour objet de nouveaux catalyseurs à base de zéolithes X qui d'une part contiennent des cations alcalins autres que le sodium et, d'autre part, sont modifiées par l'inclusion, comme additifs, d'éléments alcalins sous forme métallique. Ces nouveaux catalyseurs présentent une activité catalytique et une stabilité dans le temps accrues par rapport aux zéolithes correspondantes sans inclusion de métal alcalin.

On a découvert, de façon surprenante, que ces nouveaux catalyseurs ont un mode d'action différent de celui des zéolithes modifiées utilisées jusqu'à présent dans les réactions d'alkylation des dérivés alkyl-aromatiques. Ce mode d'action différent se traduit notamment par le fait que l'activité du catalyseur augmente généralement avec le temps de réaction, pendant plusieurs heures, alors que le phénomène inverse était observé avec les catalyseurs à base de zéolithes modifiées connues. Une telle amélioration de l'activité catalytique est d'autant plus étonnante que, selon l'expérience du demandeur, les zéolithes à cation sodium dopées au sodium métallique, qui sont connues, n'ont qu'une très faible activité catalytique dans la réaction d'alkylation du toluène.

La présente invention a donc pour objet des catalyseurs à base d'alumino-silicates ou de gallo-silicates alcalins de structure faujasite, ayant un rapport Si/Al ou Si/Ga inférieur à 1,5, dans lesquels au moins 10% des cations alcalins sont des ions potassium, rubidium et/ou césium, caractérisés par le fait qu'ils contiennent comme additif des inclusions d'au moins un élément alcalin sous forme métallique.

Dans les catalyseurs de l'invention, le rapport Si/Al ou Si/Ga est généralement supérieur ou égal à 1.

Les ions potassium, rubidium et/ou césium peuvent représenter notamment au moins 20%, et en particulier au moins 30% des cations alcalins.

Lorsque les zéolithes aux ions potassium, rubidium ou césium sont préparées directement, ces ions représentent la totalité des ions alcalins. Lorsque ces zéolithes sont préparées par échange ionique, la teneur maximum en ions potassium, rubidium et/ou césium dépend de la capacité d'échange maximum de la zéolithe de départ avec l'ion considéré. Ces capacités d'échange sont connues. Par exemple au départ d'une zéolithe à ions sodium, le sodium peut être totalement échangé par les ions potassium, mais seulement 75% environ, au maximum, des ions sodium, peuvent être échangés par les ions rubidium ou césium.

Dans les zéolithes modifiées de l'invention, les ions alcalins autres que le potassium, le rubidium et/ou le césium sont des ions sodium et/ou des ions lithium. Généralement, les ions lithium, lorsqu'ils sont présents, représentent au plus 2% du poids total du catalyseur.

Les éléments alcalins inclus sous forme métallique ajoutés comme additifs peuvent être le lithium, le sodium, le potassium, le rubidium, le césium et/ou leurs mélanges. Ces éléments alcalins métalliques sont ajoutés en proportion suffisante pour obtenir l'amélioration de l'effet catalytique. Ces proportions peuvent être déterminées aisément, par de simples expériences de routine. Généralement, la teneur en additif alcalin métallique du catalyseur peut varier de 0,1 à 15% en poids, par rapport au poids total du catalyseur, en particulier de 0,1 à 10% et notamment de 0,3 à 10%.

Les catalyseurs de l'invention peuvent contenir en outre des agents dopants, par exemple des agents dopants usuels contenant du bore, du phosphore, du cuivre, de l'argent, du manganèse, du fer, du zinc, etc... Généralement, l'agent dopant est présent dans le catalyseur à une concentration pouvant aller jusqu'à 3% en poids.

L'invention a également pour objet un procédé de préparation des catalyseurs tels que définis ci-dessus.

Ce procédé est caractérisé par le fait que l'on soumet un alumino-silicate ou un gallo-silicate de structure faujasite, ayant un rapport Si/Al ou Si/Ga inférieur à 1,5, dans lequel au moins 10% des cations alcalins sont des ions potassium, rubidium et/ou césium, à l'action d'un réactif choisi parmi les vapeurs de métaux alcalins et les dérivés alcalins capables de se décomposer en donnant le métal alcalin correspondant.

La réaction avec les vapeurs de métaux alcalins peut être effectuée selon les méthodes décrites notamment par RABO et al., article cité, et par M.R.HARRISON et al., Journal of Solid State Chemistry, 54, 330-341 (1984).

On opère généralement sous pression réduite, à température supérieure à la température d'ébullition du métal alcalin.

Les dérivés alcalins ajoutés peuvent être incorporés sous toute forme appropriée. Par exemple, ils peuvent être incorporés sous forme de poudres, par mélange mécanique, ou sous forme de solutions ou de suspensions dans un liquide approprié, par imprégnation. Le liquide est ensuite éliminé par évaporation.

Parmi les additifs capables de se décomposer en donnant des inclusions de métal alcalin dans les zéolithes, on citera en particulier les azotures alcalins, tels que les azotures de sodium et de césium, ou encore les amidures alcalins. Les additifs peuvent être incorporées dans les zéolithes soit par mélange mécanique, soit par imprégnation des zéolithes avec une solution de l'additif. On peut utiliser notamment des solutions d'azoture dans l'acétone ou le méthanol, ou encore des solutions aqueuses. Il est préférable d'employer des quantités juste suffisantes pour imprégner de façon homogène la zéolithe. On élimine ensuite le solvant par évaporation.

Les autres agents dopants éventuellement présents sont introduits selon les méthodes usuelles, soit avant, soit après l'introduction d'élément alcalin métallique.

Par exemple, pour introduire le bore, on peut utiliser la méthode décrite par C. LACROIX et al., article cité, qui consiste à imprégner la zéolithe avec une solution d'acide borique dans l'acétone.

L'étape finale de préparation du catalyseur comporte généralement un traitement thermique. Bien entendu, ce traitement thermique est effectué à une température au moins égale à la température de décomposition du dérivé alcalin additif, s'il est présent. On chauffe de préférence à une température supérieure à la température d'utilisation du catalyseur, surtout dans le cas où l'on souhaite utiliser immédiatement le catalyseur. On chauffe par exemple à une température d'au moins 450 °C environ, en particulier vers 500 °C. Ce traitement thermique peut être effectué par étapes. Par exemple on peut chauffer d'abord à une température supérieure à 100 °C et inférieure à 150 °C, et observer un palier à la température choisie (élimination de l'eau et éventuellement des solvants). On poursuit alors le chauffage, par exemple jusqu'à 500 °C, pour décomposer éventuellement le dérivé alcalin utilisé comme additif et éliminer les diverses impuretés. Ce traitement thermique peut être effectué sous atmosphère inerte, ou même sous atmosphère d'oxygène. On refroidit ensuite lentement le catalyseur à la température ambiante ou, le cas échéant, jusqu'à la température d'utilisation.

L'invention a également pour objet l'utilisation des zéolithes modifiées par un métal alcalin, telles que définies ci-dessus, comme catalyseurs dans les réactions d'alkylation des dérivés alkyl-aromatiques. De telles réactions sont connues en soi, et sont décrites notamment dans les documents de l'art antérieur cités dans l'introduction.

L'invention a en particulier pour objet un procédé d'alkylation des dérivés alkyl-aromatiques, et en particulier des dérivés alkyl-aromatiques de formule :

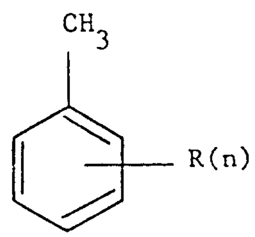

dans laquelle R représente un groupement alkyle inférieur, ayant par exemple 1 à 4, et en particulier 1 à 3 atomes de carbone, et n est un nombre entier, égal à 0, 1 ou 2, représentant le nombre de substituants R présents sur la molécule. Dans le cas où plusieurs substituants R sont présents, ils peuvent être identiques ou différents. R représente notamment un groupement méthyle, éthyle ou isopropyle.

Ce procédé d'alkylation, à l'aide d'un réactif choisi parmi le méthanol, le formaldéhyde et le méthylal, est caractérisé par le fait que l'on effectue la réaction en présence d'un catalyseur à base de zéolithe modifiée par addition de métal alcalin, telle que définie ci-dessus. L'utilisation de telles zéolithes modifiées favorise l'orientation de la réaction d'alkylation vers la formation de composés de formule :

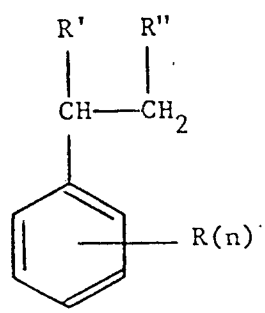

dans laquelle R' et R'' représentent chacun -H ou représentent ensemble une seconde liaison entre les groupements -CH- et $-CH_2$ auxquels ils sont respectivement attachés.

La réaction d'alkylation est effectuée généralement à une température pouvant aller de 300 à 500 °C. La détermination des températures réactionnelles appropriées peut être déterminée dans chaque cas par de simples expériences de routine. Les réactifs de départ sont mélangés sous forme gazeuse et le mélange gazeux, éventuellement entraîné par un gaz vecteur, passe dans un réacteur contenant le catalyseur. Le

gaz vecteur est par exemple l'hydrogène ou un gaz inerte tel que l'azote.

De telles réactions d'alkylation sont connues en soi.

Dans le cas de l'alkylation du toluène par le méthanol ou un autre réactif analogue, les catalyseurs de l'invention permettent d'orienter la réaction vers la formation sélective, ou prépondérante, d'éthylbenzène et de styrène selon une réaction du type :

$$2C_6H_5\text{-}CH_3 + 2CH_3OH \rightarrow C_6H_5\text{-}C_2H_5 + C_6H_5\text{-}CH=CH_2 + 2H_2O + H_2$$

Les exemples suivants illustrent l'invention sans toutefois la limiter :

EXEMPLE 1 : Préparation d'une zéolithe X échangée par des ions césium, avec introduction de sodium sous forme d'azoture

a) Echange avec l'hydroxyde de césium

Le produit de départ est une zéolithe NaX commercialisée par Union Carbide sous la désignation 13X, et qui a la formule suivante :

$$Na_{86}(AlO_2)_{86}(SiO_2)_{106}, rH_20$$

On mélange 9g de cette zéolithe avec 75cm$^3$ d'une solution 0,43M d'hydroxyde de césium à une température de 90 °C. On agite pendant 5 heures.

On sépare le produit solide par centrifugation. Le catalyseur est ensuite séché à 80 °C pendant 1 heure. Un second échange est effectué avec 100cm$^3$ d'une solution 0,43M d'hydroxyde de césium pendant 17 heures à 90 °C. Après centrifugation, le catalyseur est séché à 80 °C pendant 48 heures.

b) Incorporation d'azoture de sodium par mélange mécanique

25mg du produit obtenu au stade a) sont chauffés dans un four à 350 °C pendant 4 heures. Après refroidissement, on ajoute 2,6mg d'azoture de sodium et on mélange les deux poudres sans détruire les grains du catalyseur.

Le mélange est ensuite traité thermiquement sous courant d'azote ou d'oxygène selon le programme suivant :

- montée de la température (100 °C/h) à 130 °C ;
- palier de 1 heure à cette température ;
- montée de la température à 500 °C (250 °C/h) et palier de 5 heures à cette température ;
- refroidissement lent (30 °C/h) à température ambiante (ou à la température d'utilisation).

Le catalyseur obtenu est appelé ci-après CsX-Na(1).

EXEMPLE 2: Zéolithe X échangée au césium, avec introduction de sodium sous forme d'azoture en solution dans l'acétone

On prépare la zéolite échangée au césium comme à l'exemple 1 (1,85g). Le produit est séché pendant une nuit à 350 °C. Le solide est ensuite agité dans 20cm$^3$ d'acétone très pur contenant 0,185g d'azoture de sodium, pendant 2 heures à température ambiante L'acétone est ensuite évaporé à 60 °C. Le catalyseur est séché à 80 °C pendant 24heures. Il est ensuite soumis au même traitement thermique que le catalyseur de l'exemple 1.

Le catalyseur obtenu est appelé ci-après CsX-Na(2).

EXEMPLE 3: Zéolithe X échangée au césium, dopée au bore et au sodium métallique par introduction d'azoture de sodium

a) Zéolithe X échangée au césium et dopée au bore

On prépare une zéolithe X échangée au césium comme à l'exemple 1. 2g du produit sont séchés à 90 °C pendant une nuit. Le solide est alors agité pendant 2 heures à température ambiante, dans 30ml d'une solution de 93mg d'acide borique dans l'acétone. On laisse ensuite évaporer l'acétone. On sèche pendant 1 heure à 100 °C, puis pendant 60 heures à 150 °C.

On a observé que le catalyseur dopé au bore ainsi obtenu, après traitement thermique sous atmosphère d'azote comme à l'exemple 2, n'atteint son activité catalytique maximum dans la réaction d'alkylation du toluène qu'après 2 à 3 semaines.

Le catalyseur obtenu a donc été dopé au sodium métallique après 3 semaines de conservation.

b) Le catalyseur préparé au stade a), conservé pendant 3 semaines est chauffé à 350 °C pendant 12 heures.

Après refroidissement, 25mg du produit sont mélangés avec 2,6 mg d'azoture de sodium sous forme solide. Après mélange, pour obtenir une composition homogène, on chauffe à 300 °C, sous atmosphère d'azote, comme décrit à l'exemple 1.

Le catalyseur obtenu est appelé ci-après CsXB-Na(3)

EXEMPLE 4: Zéolithe X échangée au césium et dopée au sodium métallique par des vapeurs de sodium

On prépare une zéolithe X échangée au césium comme à l'exemple 1. 25mg du produit sont chauffés à une température de 300 °C sous courant d'oxygène pendant 5 heures, puis sous courant d'azote pendant 5 minutes. Après retour à la température ambiante, on introduit dans le bas du réacteur, sous atmosphère d'azote, un petit morceau de sodium préalablement rincé avec du toluène et séché. Le réacteur est connecté avec une pompe à palettes et la température est progressivement élevée jusqu'à 480 °C, et maintenue à cette température pendant 3 heures, puis on laisse refroidir

EXEMPLE 5: Etude de l'alkylation du toluène par le méthanol

On utilise du toluène Prolabo (qualité pour HPLC), qui contient moins de 0,03% d'eau.

Le méthanol (origine : BDH Chemical Ltd) contient 0,1% d'eau ; il est desséché sur tamis moléculaire 3Å avant utilisation.

L'appareillage utilisé permet de faire circuler dans le réacteur, soit le mélange de réactifs, soit le gaz de traitement préalable.

Le gaz de traitement préalable (azote ou oxygène) est sélectionné à l'aide d'une vanne V1 à 4 voies. Sa circulation dans le réacteur est contrôlée par une seconde vanne V2. Son débit est mesuré au moyen d'un débitmètre à bulle et réglé par une vanne à pointeau. L'alimentation en méthanol se fait par l'intermédiaire d'un système saturateur-condensateur ; la température du condensateur est maintenue constante à l'aide d'un cryostat. Le flux de gaz vecteur dont le débit est régulé par une vanne à pointeau, circule tout d'abord à travers le saturateur-condensateur. Il est ensuite mélangé au toluène injecté au moyen d'un pousse-seringue. Le mélange des réactifs s'homogénéise en passant à travers une ampoule emplie de billes de verre, placée dans une enceinte chauffée à 130 °C. La vanne V2 à 4 voies permet la circulation des réactifs vers le réacteur.

Le catalyseur (25mg) est disposé en lit mince sur un verre fritté dans le microréacteur qui est de type différentiel. Le réacteur est placé dans un four dont la température est régulée à 0,1 °C près au moyen d'un programmateur-régulateur. La vanne V2 permet de balayer le réacteur soit avec le gaz de traitement préalable, soit avec le mélange réactionnel.

A la sortie du réacteur, une vanne V3 permet de diriger les produits réactionnels, pour analyse, vers un chromatographe en phase gazeuse. Celui-ci est muni d'une vanne d'injection automatique chauffante à commande pneumatique. Les prélèvements se font à intervalles réguliers. La vanne commande simultanément l'intégrateur de pics. La séparation des produits est effectuée à 110 °C sur une colonne Chromosorb® (granulométrie = 60-80 mesh soit 200-250 micromètres) contenant 5% de phtalate de didodécyle et 5% de bentone 34 (longueur de la colonne = 6 mètres). La pression en tête de colonne est de 2,7 bar. La détection se fait par ionisation de flamme. La température du détecteur est de 200 °C.

Dans les conditions expérimentales indiquées, les temps de rétention obtenus sont les suivants (en secondes) : diméthyléther : 130 ; méthanol : 199 ; benzène : 266 ; toluène : 382 ; éthylbenzène : 577 ; paraxylène : 618 ; métaxylène : 668 ; orthoxylène : 741 ; styrène : 942.

Bien entendu, les intervalles entre deux injections du flux gazeux sont choisis en tenant compte de ces temps de rétention.

Chaque test se déroule de la manière suivante :

1) 25mg de catalyseur sont placés dans le réacteur et traités sous courant d'azote ou d'oxygène (3 l/h) selon le programme suivant :

- montée en température 100 °C/heure de 25 °C à 130 °C ;
- maintien de la température à 130 °C pendant 1 heure ;
- montée en température (250 °C/heure) de 130 à 500 °C ;
- maintien de la température à 500 °C pendant 5 heures ;
- baisse de la température (30 °C/heure) de 500 °C à 425 °C (température d'utilisation).

2) Le mélange de toluène et de méthanol entraîné par le gaz vecteur (hydrogène) est analysé par chromatographie en phase gazeuse jusqu'à ce que les proportions voulues des réactifs soient atteintes

et restent stables ;

3) Le mélange réactionnel est alors introduit dans le réacteur par la vanne V2 et analysé à la sortie, par chromatographie, à intervalles réguliers, pendant une durée variant de 3 à 24 heures.

Pour exprimer les résultats du test catalytique plusieurs grandeurs sont utilisables. Les conditions expérimentales sont telles que l'un des réactifs, le toluène, est en excès par rapport a l'autre, le méthanol. On définit donc le taux de conversion de méthanol (Tm) en % :

$$Tm = \frac{\text{nombre de moles de méthanol transformé}}{\text{nombre de moles de méthanol initial}} \times 100$$

Le pourcentage de formation d'un produit p (Fp) est défini de la façon suivante :

$$Fp = \frac{\text{nombre de moles de p formé}}{\text{nombre de moles de méthanol initial}} \times 100$$

En particulier Fst désigne le pourcentage de formation de styrène et Feb désigne le pourcentage de formation d'éthylbenzène.

On définit également la sélectivité (S) en styrène et éthylbenzène par rapport au méthanol transformé :

$$S = \frac{Fst + Feb}{Tm} \times 100$$

Les valeurs Tm, Fp et S sont des valeurs instantanées, mesurées au bout d'un temps de réaction donné.

EXEMPLE 6 : Etude du catalyseur de l'exemple 1

Ce catalyseur est étudié par comparaison avec le catalyseur simplement échangé au césium obtenu à l'exemple 1, stade a). Ce catalyseur de comparaison est désigné par la notation abrégée CsXOH.

Le catalyseur CsX-Na(1), préparé immédiatement avant l'essai, a subi le traitement thermique final, mentionné à l'exemple 1, dans le réacteur, sous atmosphère d'azote dans un cas et d'oxygène dans un autre cas. On procède ensuite à la réaction d'alkylation selon le protocole décrit à l'exemple 5. Les résultats sont résumés dans le tableau I dans lequel t/m représente le rapport du nombre de moles de toluène au nombre de moles de méthanol du mélange entrant. Le gaz vecteur est l'hydrogène (débit 2,25 l/h).

TABLEAU I

| Traitement préalable | Catalyseur | CsXOH | | CsX-Na(1) | |
|---|---|---|---|---|---|
| Oxygène | t/m | 9 | | 11,3 | |
| | temps (h) | 6 | 15 | 6 | 15 |
| | Tm(%) | 30 | 20 | 29 | 26 |
| | Fst(%) | 2,1 | 1,1 | 3,8 | 3,1 |
| | Feb(%) | 1,5 | 0,6 | 3,4 | 2,6 |
| | S(%) | 12 | 8,5 | 24,8 | 21,9 |
| Azote | t/m | 9 | | 10 | |
| | temps (h) | 6 | | 6 | 15 |
| | Tm(%) | 15 | | 45 | 40 |
| | Fst(%) | 0,7 | | 4,3 | 4 |
| | Feb(%) | 0,25 | | 4,1 | 3,8 |
| | S(%) | 6,3 | | 18,6 | 19,5 |

Ces résultats montrent que la sélectivité du catalyseur de l'exemple 1 est fortement augmentée par rapport à celle du produit de comparaison, et que l'activité catalytique reste importante même après 15 heures d'utilisation.

A titre de comparaison, on a étudié l'activité catalytique d'une zéolithe X à cations sodium avec inclusion de sodium, obtenue par mélange de la zéolithe 13X avec l'azoture de sodium, en même proportion qu'à l'exemple 1b. Ce mélange est soumis au même traitement thermique qu'à l'exemple 1. Avec ce catalyseur, la réaction d'alkylation du toluène a été étudiée comme ci-dessus. (t/m = 1,4) . Les pourcentages de formation Feb et Fst sont inférieurs à 0,1%.

EXEMPLE 7 : Etude du catalyseur de l'exemple 2

Cette étude est effectuée selon le protocole de l'exemple 5.

L'étude de ce catalyseur CsX-Na(2) a été effectuée par rapport au catalyseur CsXOH de l'exemple 1 a).

Le traitement préalable du catalyseur est effectué sous courant d'azote de façon analogue à celle décrite à l'exemple 6, mais un palier de 1h30 à 300°C a été effectué. Ce traitement est suivi d'un chauffage jusqu'à la température de réaction.

Les résultats sont résumés dans le tableau II dans lequel T°C représente la température réactionnelle et TR représente le temps de réaction en heures. Dans ces expériences, les valeurs t/m étaient de 8,3.

TABLEAU II

| | CsXOH | | | | CsX-Na(2) | | | |
|---|---|---|---|---|---|---|---|---|
| T°C | TR | Tm% | Fst% | Feb% | TR | Tm% | Fst% | Feb% |
| 425°C | 1h<br>4,5h | 44<br>41 | 2,3<br>1,85 | 3,11<br>2,6 | 16h | 40 | 1,1 | 1,1 |
| 450°C | 5,5h | 64 | 1,8 | 3,6 | 20h | 63 | 2,2 | 3,6 |
| 475°C | 7 h | 80 | 1,3 | 3,7 | 22h | 58 | 2 | 4 |
| 490°C | 8,5h | 80 | 1,2 | 3,4 | 23,5h | 70 | 1,8 | 4,5 |

A des températures supérieures à 425 °C on observe des traces d'orthoxylène (2 fois moins avec le catalyseur CsX-Na(2) qu'avec le catalyseur CsXOH).

EXEMPLE 8 : Etude du catalyseur de l'exemple 3

L'étude est effectuée dans des conditions comparables à celles de l'exemple 6.

L'étude est menée en comparaison avec le catalyseur de l'exemple 1 a), désigné par CsXOH, et par rapport au catalyseur obtenu à l'exemple 3, stade a), désigné par CsXB.

Les résultats sont résumés dans le tableau III, dans lequel ND signifie : non déterminé. Les valeurs de t/m étaient comprises entre 7 et 9.

TABLEAU III

| Catalyseur | Traitement préalable | Tm% après | | Fst% après | | Feb% après | | S% après | |
|---|---|---|---|---|---|---|---|---|---|
| | | 6h | 15h | 6h | 15h | 6h | 15h | 6h | 15h |
| CsXOH | Azote<br>Oxygène | 15<br>30 | ND<br>20 | 0,7<br>2,1 | ND<br>1,1 | 0,25<br>1,5 | ND<br>0,6 | 6,3<br>12 | ND<br>8,5 |
| CsXB | Azote | 15 | 12 | 5 | 3,1 | 0,35 | 0,1 | 36 | 27 |
| CsXB-Na(3) | Azote | 8,5 | 5,5 | 3,5 | 2,7 | 1,1 | 0,65 | 54 | 60 |

On voit que le catalyseur de l'exemple 3 permet d'orienter la réaction vers la formation de styrène et d'éthylbenzène avec une sélectivité intéressante.

## Revendications

1. Catalyseurs à base d'alumino-silicates ou de gallo-silicates alcalins de structure faujasite, ayant un rapport Si/Al ou si/Ga inférieur à 1,5, dans lesquels au moins 10% des cations alcalins sont des ions potassium, rubidium et/ou césium, caractérisés par le fait qu'ils contiennent comme additif des inclusions d'au moins un élément alcalin sous forme métallique.

2. Catalyseurs selon la revendication 1, caractérisés par le fait que les ions alcalins autres que le potassium, le rubidium et/ou le césium sont dos ions sodium et/ou lithium.

3. Catalyseurs selon la revendication 1 ou 2, caractérisés par le fait que ledit élément alcalin sous forme métallique est présent dans des proportions pouvant aller de 0,1 à 15% en poids, par rapport au poids total du catalyseur.

4. Catalyseurs selon l'une quelconque des revendications précédentes, caractérisés par le fait qu'ils contiennent en outre un agent dopant.

5. Catalyseurs selon la revendication 4, caractérisés par le fait que ledit agent dopant contient du bore.

6. Catalyseurs selon l'une quelconque des revendications précédentes, caractérisés par le fait qu'au moins 20% des cations alcalins sont des ions potassium, rubidium et/ou césium.

7. Procédé de préparation d'un catalyseur tel que défini dans l'une quelconque des revendications précédentes, caractérisé par le fait que l'on soumet un alumino-silicate ou un gallo-silicate de structure faujasite, ayant un rapport Si/Al ou Si/Ga inférieur à 1,5, dans lequel au moins 10% des cations alcalins sont des ions potassium, rubidium et/ou césium, à l'action d'un réactif choisi parmi les vapeurs de métaux alcalins et un dérivé alcalin capable de se décomposer en donnant le métal alcalin correspondant.

8. Procédé selon la revendication 7 , caractérisé par le fait que ledit dérivé alcalin est incorporé sous forme de poudre, par mélange mécanique, ou sous forme de solution ou suspension dans un liquide, par imprégnation.

9. Procédé selon la revendication 7 ou 8, caractérisé par le fait que ledit dérivé alcalin est choisi parmi les azotures et les amidures.

10. Procédé selon l'une quelconque des revendications 7 à 9, caractérisé par le fait que l'on soumet en outre le catalyseur à une étape finale de traitement thermique.

11. Utilisation d'un catalyseur tel que défini dans l'une quelconque des revendications 1 à 6, dans les réactions d'alkylation des dérivés alkyl-aromatiques.

12. Procédé d'alkylation des dérivés alkyl-aromatiques de formule:

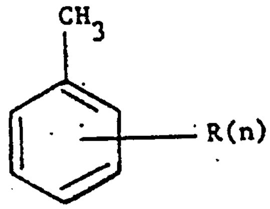

dans laquelle R représente un groupement alkyle ayant 1 à 4 atomes de carbone et n est un nombre entier, égal à 0, 1 ou 2, représentant le nombre de substituants R présents sur la molécule, à l'aide d'un réactif choisi parmi le méthanol, le formaldéhyde et le méthylal, caractérisé par le fait que l'on effectue la réaction en présence d'un catalyseur tel que défini dans l'une quelconque des revendications 1 à 6.

13. Procédé selon la revendication 12, caractérisé par le fait que ledit groupement alkyle à 1 à 3 atomes de carbone.

## Claims

1. Catalysts based on alkali metal aluminosilicates or gallosilicates of faujasite structure, having an Si/Al Or Si/Ga ratio of less than 1.5, in which at least 10% of the alkali metal cations are potassium, rubidium

and/or caesium ions, characterised in that they contain, as additive, inclusions of at least one alkali metal element in metallic form.

2. Catalysts according to Claim 1, characterised in that the alkali metal ions other than potassium, rubidium and/or caesium are sodium and/or lithium ions.

3. Catalysts according to Claim 1 or 2, characterised in that the said alkali metal element in metallic form is present in proportions which can range from 0.1 to 15% by weight with respect to the total weight of the catalyst.

4. Catalysts according to any one of the preceding claims, characterised in that they additionally contain a doping agent.

5. Catalysts according to Claim 4, characterised in that the said doping agent contains boron.

6. Catalysts according to any one of the preceding claims, characterised in that at least 20% of the alkali metal cations are potassium, rubidium and/or caesium ions.

7. Process for the preparation of a catalyst as defined in any one of the preceding claims, characterised in that on aluminosilicate or a gallosilicate of faujasite structure, having an Si/Al or Si/Ga ratio of less than 1.5, in which at least 10% of the alkali metal cations are potassium, rubidium and/or caesium ions, is subjected to the action of a reactant chosen from alkali metal vapours and an alkali metal derivative capable of decomposing to give the corresponding alkali metal.

8. Process according to Claim 7, characterised in that the said alkali metal derivative is incorporated in the powder form, by mechanical mixing, or in the form of a solution or suspension in a liquid, by impregnation.

9. Process according to Claim 7 or 8, characterised in that the said alkali metal derivative is chosen from azides and amides.

10. Process according to any one of Claims 7 to 9, characterised in that the catalyst is additionally subjected to a final heat treatment stage.

11. Use of a catalyst as defined in any one of Claims 1 to 6 in alkylation reactions of alkylaromatic derivatives.

12. Process for the alkylation of alkylaromatic derivatives of formula:

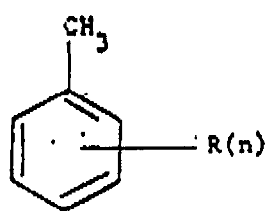

in which R represents in alkyl group having 1 to 4 carbon atoms and n is an integer, equal to 0, 1 or 2, representing the number of substituents R present on the molecule, using a reactant chosen from methanol, formaldehyde and methylal, characterised in that the reaction is carried out in the presence of a catalyst as defined in any one of Claims 1 to 6.

13. Process according to Claim 12, characterised in that the said alkyl group has 1 to 3 carbon atoms.

## Patentansprüche

1. Katalysatoren auf der Basis von Alkalialumino- oder Alkaligallosilikaten mit Faujasit-Struktur, einem Si/Al- oder Si/Ga-Verhältnis unterhalb 1,5, wobei mindestens 10 % der Alkalikationen Kalium-,

Rubidium- und/oder Cäsiumionen sind, dadurch gekennzeichnet, daß sie als Additiv mindestens ein Alkalielement in metallischer Form eingeschlossen enthalten.

**2.** Katalysatoren nach Anspruch 1, dadurch gekennzeichnet, daß die von Kalium-, Rubidium- und/oder Cäsium- verschiedenen Alkalionen Natrium und/oder Lithiumionen sind.

**3.** Katalysatoren nach den Ansprüchen 1 oder 2, dadurch gekennzeichnet, daß das metallische Alkalielement in Verhältnissen von 0,1 bis 15 Gew.-%, bezogen auf das Gesamtgewicht des Katalysators, vorliegt.

**4.** Katalysatoren nach einem der vorhergehenden Ansprüche, dadurch gekennzeichnet, daß sie außerdem eine Dopsubstanz enthalten.

**5.** Katalysatoren nach Anspruch 4, dadurch gekennzeichnet, daß die Dopsubstanz Bor enthält.

**6.** Verfahren nach einem der vorhergehenden Ansprüche, dadurch gekennzeichnet, daß mindestens 20 % der Alkalikationen Kalium-, Rubidium- und/oder Cäsiumionen sind.

**7.** Verfahren zur Herstellung eines Katalysators nach einem der vorhergehenden Ansprüche, dadurch gekennzeichnet, daß man ein Aluminosilikat oder ein Gallosilikat mit Faujasit-Struktur, mit einem Si/Al- oder Si/Ga-Verhältnis unterhalb 1,5, wobei mindestens 10 % der Alkalikationen Kalium-, Rubidium- und/oder Cäsiumionen sind, der Einwirkung eines Reagens aussetzt, das aus Dämpfen von Alkalimetallen und eines Alkaliderivates ausgewählt ist, das fähig ist, sich unter Bildung des entsprechenden Alkalimetalles zu zersetzen.

**8.** Verfahren nach Anspruch 7, dadurch gekennzeichnet, daß das Alkaliderivat als Pulver, durch mechanisches Vermischen, als Lösung oder Suspension in einer Flüssigkeit, oder Imprägnieren einverleibt wird.

**9.** Verfahren nach Anspruch 7 oder 8, dadurch gekennzeichnet, daß das Alkaliderivat unter den Nitriden und Amiden ausgewählt wird.

**10.** Verfahren nach einem der Ansprüche 7 bis 9, dadurch gekennzeichnet, daß man den Katalysator in einer Endstufe einer thermischen Behandlung unterwirft.

**11.** Verwendung eines Katalysators nach einem der Ansprüche 1 bis 6 bei der Alkylierung von alkylaromatischen Verbindungen.

**12.** Verfahren zur Alkylierung von Alkylaromaten der Formel:

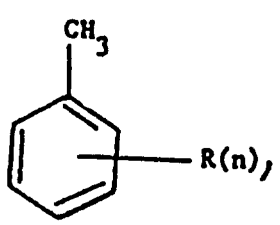

in der R eine Alkylgruppe mit 1 bis 4 Kohlenstoffatomen bedeutet, n eine ganze Zahl gleich 0, 1 oder 2 ist, und die Zahl der Substituenten R, die sich am Molekül befinden, bedeutet, mit Hilfe eines Reagens, ausgewählt aus Methanol, Formaldehyd und Methylal unterwirft, dadurch gekennzeichnet, daß man die Umsetzung in Anwesenheit eines Katalysators nach einem der Ansprüche 1 bis 6 durchführt.

**13.** Verfahren nach Anspruch 12, dadurch gekennzeichnet, daß die Alkylgruppe 1 bis 3 Kohlenstoffatome aufweist.